# EUROPÄISCHE PATENTANMELDUNG

(11) **EP 0 857 950 A1**
(43) Veröffentlichungstag der Anmeldung: **12.08.1998**
(21) Anmeldenummer: 97117836.3
(22) Anmeldetag: 15.10.1997
(51) Int. Cl.: G01F 1/26, G01F 1/24

(54) **Elektrofluidischer Volumenstromsensor**

(30) Priorität: 06.02.1997 DE 19704453
(71) Anmelder: ROBERT BOSCH GMBH, 70442 Stuttgart (DE)
(72) Erfinder: Steprath, Werner, 41542 Dormagen (DE)

(57) **Zusammenfassung**

Es wird ein elektrofluidischer Volumenstromsensor (10) vorgeschlagen, der abhängig von der Größe eines Volumenstroms ein elektrisches Ausgangssignal erzeugt, das zum Ansteuern von Volumenstromreglern verwendbar ist. Im Volumenstromsensor (10) wird der als Blende arbeitende variable Steuerquerschnitt (34) von einem stiftförmigen, gehäusefesten Innenkörper (36) und einem diesen ringförmige umgebenden Außenkörper (35) gebildet, die jeweils einen profilierten Wulst (38, 44) aufweisen. Dabei ist der Außenkörper als Schwebekörper (39) zwischen zwei sich gehäusefest abstützenden Federn (41, 42) eingespannt und damit berührungsfrei in einem Druckrohr (26) im Gehäuse (11) beweglich gelagert, wobei dessen Weg induktiv über außen am Druckrohr (26) angeordnete elektrische Spulen (28, 29) gemessen und zum elektrischen Ausgangssignal verarbeitet wird.

## Beschreibung

### Stand der Technik

Die Erfindung geht aus von einem elektrofluidischen Volumenstromsensor nach der im Oberbegriff des Anspruchs 1 näher angegebenen Gattung.

Aus der US-PS 4 205 592 ist ein elektrofluidischer Volumenstromsensor bekannt, bei dem ein axial beweglicher, profilierter Innenkörper in einem gehäusefesten, profilierten Außenkörper gelagert ist und einen variablen Blendenquerschnitt in einem von dem Volumenstrom durchströmten Kanal bildet. Der zu messende Volumenstrom lenkt den tellerförmigen Innenkörper gegen die Kraft einer Feder aus, wobei dessen Hub von einem elektromechanischem Wegaufnehmer erfaßt wird und zu einem durchflußproportionalen Ausgangssignal verarbeitet wird. Von Nachteil bei diesem Volumenstromsensor ist, daß der als lineares Potentiometer ausgebildete Wegaufnehmer axial außerhalb des Kanals mit seinen Anschlüssen angeordnet ist, so daß der Volumenstromsensor aufwendig und in axialer Richtung sehr lang baut. Zudem muß die Hubbewegung über eine lange Stange übertragen werden, auf welcher der profilierte Innenkörper befestigt ist. Die Stange selbst ist mit beiden Enden im Gehäuse gleitend gelagert. Diese Bauweise erhöht nicht nur den Aufwand, sondern führt vor allem zu einer erheblichen Hysterese, die vor allem die Genauigkeit beim Nulldurchgang der Volumenstrom-Kennlinie stark stört. Auch wird die den Innenkörper belastende Feder im Bereich des Anschlusses radial durchströmt, was die Meßgenauigkeit des Volumenstromsensors beeinträchtigt. Weiterhin ist der profilierte Außenkörper als ein Teil des Gehäuses dargestellt und somit schwer zugänglich. Zudem beeinträchtigen zwei in den Volumenstrom geschaltete Federteller die Meßgenauigkeit des Volumenstromsensors zusätzlich. Die Meßgenauigkeit im Kleinsignalbereich bzw. im Nulldurchgang der Kennlinie ist hier unbefriedigend.

### Vorteile der Erfindung

Der erfindungsgemäße elektrofluidische Volumenstromsensor mit den kennzeichnenden Merkmalen des Anspruchs 1 hat demgegenüber den Vorteil, daß er eine einfache, kompakte und kostengünstige Bauweise ermöglicht, die zudem auch hohe Anforderungen an die Meßgenauigkeit erfüllt. So ist der bewegliche Schwebekörper berührungsfrei und damit reibungsarm bzw. reibungsfrei gelagert, so daß die Hysterese äußerst gering ist. Bei dem Volumenstromsensor treten keine radialen Kräfte auf, welche dessen Meßgenauigkeit beeinträchtigen könnten. Der Wandler zur Huberfassung kann nun in der gleichen radialen Ebene wie der Schwebekörper angeordnet werden, wodurch sich der Volumenstromsensor für verschiedene Meßprinzipien zur Huberfassung eignet. Zudem eignet sich diese Bauweise des Volumenstromsensors auch für einen großen Meßbereich.

Durch die in den Unteransprüchen aufgeführten Maßnahmen sind vorteilhafte Weiterbildungen und Verbesserungen des im Anspruch 1 angegebenen Volumenstromsensors möglich. Besonders vorteilhaft sind Ausbildungen nach den Ansprüchen 2 und 3, welche eine genaue Arbeitsweise begünstigen, indem ein wegproportionales Meßsignal von hoher Genauigkeit erzielbar ist. Zudem läßt sich eine hysteresearme Bauweise erreichen, da die noch verbleibende Materialreibung in den Federn vernachlässigbar gering ist. Durch den einfachen und zentrischen Aufbau ergibt sich eine günstige Strömungsführung. Besonders zweckmäßig sind ferner Ausführungen nach den Ansprüchen 5 bis 9, die nicht nur eine einfache und platzsparende Bauweise begünstigen, sondern durch die Anwendung des induktiven Meßprinzips eine wegproportionale Meßwerterfassung von hoher Genauigkeit und großer Stabilität ermöglichen. Der nach dem induktiven Meßprinzip arbeitende Wandler kann in bewährter Weise aus kostengünstigen und einfachen Elementen zusammengebaut werden, wobei sich der Wandler besonders durch seine Linearität und seine Temperaturstabilität über große Bereiche auszeichnet. Ferner ist eine Ausbildung nach Anspruch 10 günstig, wodurch sich der Volumenstromsensor zur Messung in beiden Strömungsrichtungen eignet. Weiterhin ist es zweckmäßig, durch eine Ausbildung des Volumenstromsensors nach Anspruch 11 die zur Lagerung des Schwebekörpers dienenden Federn so auszubilden und anzuordnen, daß sie den Volumenstrom im Kanal nicht stören. Dabei wird eine radiale Durchströmung der Federn vermieden, so daß auch keine radialen Kräfte die Lagerung des Schwebekörpers stören können, was die Genauigkeit des Volumenstromsensors begünstigt. Durch eine Ausbildung nach den Ansprüchen 12 und 13 läßt sich ein gewünschter Verlauf der Kennlinie des elektrischen Ausgangssignals in Abhängigkeit vom Volumenstrom an gegebene Forderungen anpassen. Vorteilhaft ist es ferner, den Volumenstromsensor nach den Ansprüchen 15 bis 17 auszuführen, um einen einfachen, kostengünstigen und leicht zugänglichen Aufbau zu erreichen, wobei auch dessen Integration in das Gehäuse eines Wegeventils möglich ist. Nach den Ansprüchen 18 bis 20 lassen sich auch andere Meßprinzipien bei dem Volumenstromsensor in vorteilhafter Weise anwenden. Weitere vorteilhafte Ausgestaltungen ergeben sich aus den übrigen Ansprüchen, der Beschreibung sowie der Zeichnung.

### Zeichnung

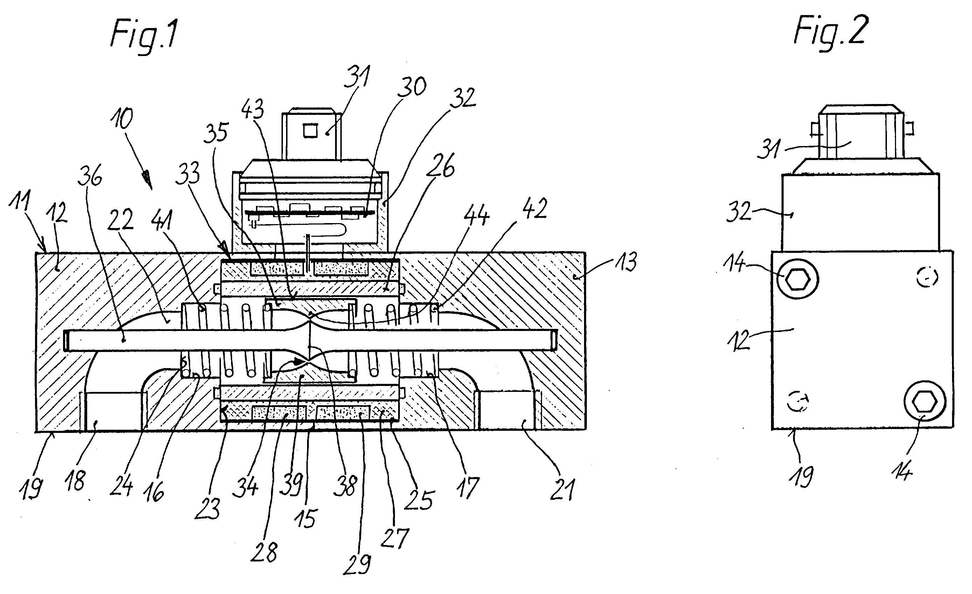

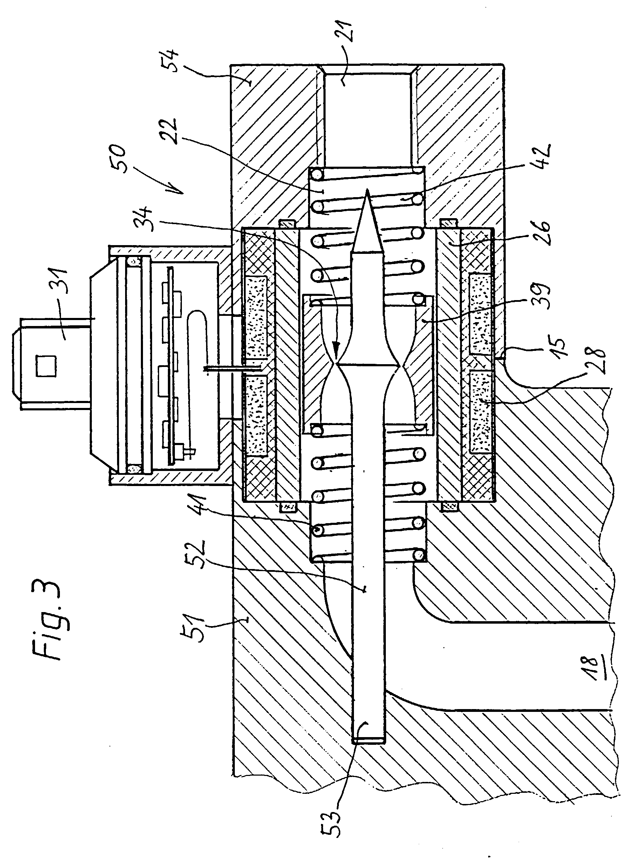

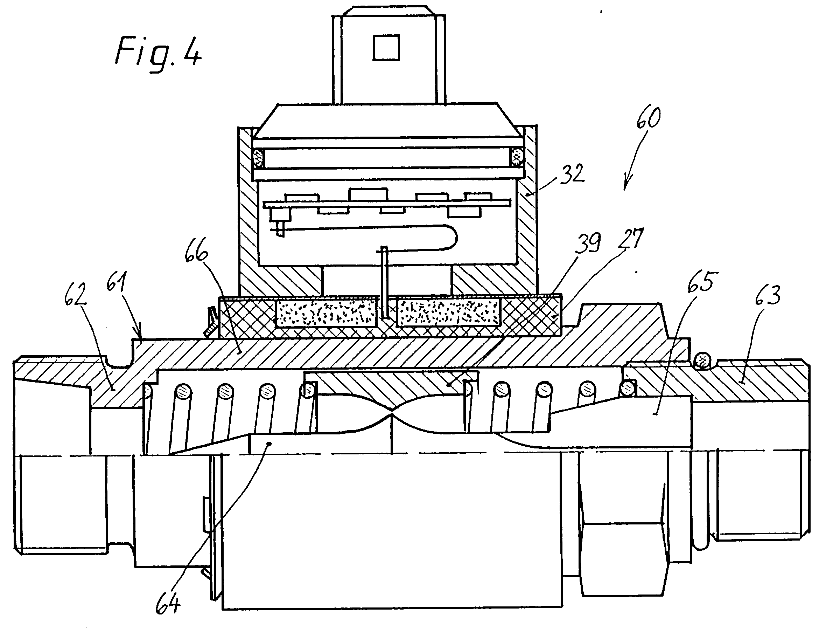

Drei Ausführungsbeispiele der Erfindung sind in der Zeichnung dargestellt und in der nachfolgenden Beschreibung näher erläutert. Es zeigen Figur 1 einen Längsschnitt durch ein erstes Ausführungsbeispiel des Volumenstromsensors in vereinfachter Darstellung, Figur 2 eine Seitenansicht des Volumenstromsensors nach Figur 1 und Figur 3 einen Längsschnitt durch ein zweites Ausführungsbeispiel. Figur 4 zeigt einen Teilschnitt durch ein drittes Ausführungsbeispiel.

### Beschreibung der Ausführungsbeispiele

Die Figur 1 zeigt einen Längsschnitt durch einen elektrofluidisichen Volumenstromsensor 10, der ein von der Größe des durchfließenden Volumenstroms abhängiges, elektrisches Ausgangssignal erzeugt, wobei die Volumenströme in beiden Strömungsrichtungen erfaßbar sind. Der Volumenstromsensor 10 hat ein Gehäuse 11, das aus zwei gleichartig aufgebauten Gehäuseteilen 12 und 13 besteht. Wie Figur 1 in Verbindung mit Figur 2 näher zeigt, sind die beiden quaderförmigen Gehäuseteile 12, 13 durch Schrauben 14 aneinander befestigt, so daß ihre Stirnseiten in einer Trennebene 15 aneinanderstoßen. In jedem Gehäuseteil 12, 13 ist eine durchgehende, mehrfach abgesetzte Stufenbohrung 16 bzw. 17 angeordnet, die mit ihren großen Durchmessern in der Trennebene 15 aneinanderstoßen. Von diesen koaxial zueinander verlaufenden Stufenbohrungen 16, 17 verläuft im ersten Gehäuseteil 12 in radialer Richtung ein erster Druckmittel-Anschluß 18 in eine Anbaufläche 19. In entsprechender Weise verläuft in dem zweiten Gehäuseteil 13 ein zweiter Druckmittel-Anschluß 21 zur gleichen Anbaufläche 19. Die beiden Anschlüsse 18, 21 sind auf diese Weise durch einen durch die Stufenbohrungen 16, 17 verlaufenden Kanal 22 miteinander verbunden.

In jeder der beiden Stufenbohrungen 16, 17 sind ausgehend von der Trennebene 15 ein erster und zweiter axialer Absatz 23, 24 ausgebildet. Zwischen die beiden ersten Absätze 23 ist im Gehäuse 11 ein Druckrohr 26 eingesetzt und jeweils stirnseitig durch Dichtringe abgedichtet. Dieses Druckrohr ist als durchgehender, hohlzylindrischer Rohrabschnitt ausgebildet und baut somit einfach. Das Druckrohr 26 besteht aus einem magnetisch nicht leitenden Material, wobei sich hier besonders ein rostfreier Stahl eignet. Außen auf das Druckrohr 26 ist ein Spulenträger 27 aufgeschoben, in dem zwei Spulen 28, 29 angeordnet sind. Diese Spulen 28, 29 stehen mit einem elektrischen Stecker 31 in Wirkverbindung, der in einem Steckergehäuse 32 sitzt, das seinerseits am Gehäuse 11 im Bereich der Trennebene 15 befestigt ist. Im Stecker 31 ist zusätzlich eine erforderliche Auswerte-Elektronik 30 untergebracht. Der zwischen den ersten Absätzen 23 im Gehäuse 11 sich abstützende Spulenträger 27 ist durch das Druckrohr 26 vom druckmittelgefüllten Kanal 22 in dichter Weise getrennt. Das Druckrohr 26 wie auch die Spulen 28, 29 sind Teile eines elektromechanischen Wandlers 33, der nach einem an sich bekannten induktiven Meßprinzip arbeitet und abhängig von dem Weg eines mechanischen Bauelements ein dazu möglichst proportionales elektrisches Ausgangssignal erzeugt. Der Spulenträger 27 ist außen von einem geschlitzten Eisenrohr 25 gegen Wirbelstromverluste abgeschirmt.

Im Inneren des Gehäuses 11 ist in den Kanal 22 ein als Blende arbeitender, variabler Steuerquerschnitt 34 geschaltet, durch den der zu messende Volumenstrom in beiden Strömungsrichtungen geführt wird. Dabei wird dieser Steuerquerschnitt 34 von einem ringförmigen Außenkörper 35 und einem diesen zentrisch durchdringenden, stiftförmigen Innenkörper 36 gebildet, die zur Bildung des variablen Steuerquerschnitts 34 relativ zueinander beweglich sind. Dabei ist der Innenkörper 36 gehäusefest gelagert, indem er mit seinen Enden im Gehäuse 11 eingespannt ist. Der Innenkörper 36 durchdringt zentrisch die Stufenbohrungen 16, 17 und damit auch den Kanal 22. Im Bereich der Trennebene 15 weist der stiftförmige Innenkörper 36 einen profilierten Wulst 38 auf.

Der dem Innenkörper 36 zugeordnete, zur Bildung des variablen Steuerquerschnitts 34 dienende Außenkörper 35 ist hier als im Gehäuse beweglich angeordneter Schwebekörper 39 ausgebildet. Dieser Schwebekörper 39 ist zwischen zwei Federn 41, 42 eingespannt, welche sich im Gehäuse 11 an den jeweils zweiten Absätzen 24 abstützen. Der Schwebekörper 39 weist im wesentlichen eine hülsenförmige Form auf und hat außen eine in Längsrichtung gesehen ebene, kreiszylindrisch ausgebildete Mantelfläche 43. Zwischen Mantelfläche 43 und Innendurchmesser des Druckrohrs 26 ist ausreichend Spiel, so daß der Schwebekörper 39 im Druckrohr 26 berührungsfrei und damit besonders reibungsarm gelagert ist. An seiner Innenwand weist der Schwebekörper 39 ebenfalls einen in Achsrichtung profilierten Wulst 44 auf, der dem profilierten Wulst 38 am Innenkörper 36 zugeordnet ist. In der gezeichneten Nullstellung des Volumenstromsensors 10 berühren sich die beiden Ringkanten der beiden Wülste 38 und 44 nicht, so daß ein dünner Ringspalt verbleibt, der den minimalen variablen Steuerquerschnitt darstellt. Der Schwebekörper 39 wird somit lediglich durch die Federn 41, 42 berührungsfrei und damit nahezu reibungslos im Kanal 22 gehalten, durch den der zu messende Volumenstrom fließen muß. Der Schwebekörper 39 und die Federn 41, 42 sind alle gleichachsig und damit konzentrisch zum Druckrohr 26 angeordnet. Die Federn 41, 42 sind dabei im Durchmesser so groß ausgelegt, daß sie nur axial durchströmt werden und den Volumenstrom nicht stören.

Der Schwebekörper 39 bildet hier ein unmittelbares Bauteil des elektromechanischen Wandlers 33 und ist zu diesem Zweck aus einem ferromagnetischen Material gebildet. Der Schwebekörper 39 besteht aus Eisen oder einer magnetisierbaren Legierung und läßt sich besonders günstig durch Sinterverfahren herstellen.

Die Wirkungsweise des Volumenstromsensors 10 wird wie folgt erläutert, wobei dessen grundsätzliche Funktion als an sich bekannt vorausgesetzt wird.

Fließt im Volumenstromsensor 10 ein zu messender Volumenstrom vom ersten Druckmittel-Anschluß 18 über den Kanal 22 zum zweiten Druckmittel-Anschluß 21, so durchströmt er den als Blende wirkenden variablen Steuerquerschnitt 34. Die Größe des Volumenstroms durch den Steuerquerschnitt 34 ist dabei nach der Blendengleichung proportional zu dem quadratischen Wurzelwert aus dem vorhandenen Druckgefälle. Dieses Druckgefälle wirkt auf den Schwebekörper 39 und schiebt ihn aus der gezeichneten Nullage gegen die Kraft der zweiten Feder 42 in Strömungsrichtung. Dabei wird das Druckgefälle über die Federn 41, 42 in einen Weg des Schwebekörpers 39 gewandelt. Der Weg dieses Schwebekörpers 39 wird durch das an sich bekannte induktive Meßprinzip erfaßt und in eine davon abhängige proportionale elektrische Ausgangsspannung am Stecker 31 überführt. Das elektrische Ausgangssignal am Stecker 31 ist somit ein Maß für die Größe des durchfließenden Volumenstroms. Dabei sind die profilierten Wülste 38 und 44 am Innenkörper 36 bzw. am Schwebekörper 39 so ausgebildet, daß der von ihnen freigegebene variable Steuerquerschnitt 34 die natürlicherweise parabolische Meßcharakteristik linearisiert oder auch in einer vorbestimmten Weise gestaltet. Der Weg des Schwebekörpers 39 wird dabei durch die Wand des Druckrohres 26 hindurch wie bei einem induktiven Wegaufnehmer gemessen.

Durch die berührungsfreie Halterung des Schwebekörpers 39 im Kanal 22 arbeitet der Volumenstromsensor weitgehend hysteresefrei, da nur die innere Materialreibung in den Federn 41, 42 überwunden werden muß, die vernachlässigbar gering ist. Durch die Ausbildung des Schwebekörpers 39 mit einer außen gleichmäßigen glatten Mantelfläche 43 läßt sich mit dem einfachen und bewährten induktiven Meßprinzip eine genaue und schnelle Wegmessung erreichen. Der Verlauf der Kennlinie des Volumenstromsensors 10, nämlich dessen elektrische Ausgangsspannung in Abhängigkeit von der Größe des Volumenstroms, läßt sich durch eine entsprechende Ausgestaltung der profilierten Wülste 38 bzw. 44 an die jeweiligen Verhältnisse anpassen, so daß eine durchgehend lineare Kennlinie oder zum Beispiel eine im Nulldurchgang mit erhöhter Empfindlichkeit ausgerüstete Kennlinie erreicht wird. Trotz des einfachen Aufbaus und der kompakten Bauweise des Volumenstromsensors 10 wird der Volumenstrom im Kanal 22 möglichst geradlinig geführt, wobei keine radiale Durchströmung der Federn 41, 42 auftritt. Die rein axiale und rotationssymmetrisch geführte Strömung im Bereich der Federn 41, 42 und des Schwebekörpers 39 verhindern störende Radialkräfte auf den Schwebekörper 39, so daß besonders auch im Nulldurchgang eine hohe Genauigkeit erzielt wird. Durch seine kompakte und integrierte Bauweise hat der Volumenstromsensor 10 die Eigenschaft, daß eine Sprungantwort sehr schnell und mit einer geringen Einschwingung erfolgt. Zudem hat der Volumenstromsensor 10 den Vorteil, daß er in beiden Strömungsrichtungen einen großen Meßbereich aufweist und vor allem durch sein induktives Meßprinzip sehr temperaturstabil arbeitet.

Die Figur 3 zeigt einen Längsschnitt durch einen zweiten Volumenstromsensor 50, der sich vom ersten Volumenstromsensor 10 nach Figur 1 wie folgt unterscheidet, wobei für gleiche Bauelemente gleiche Bezugszeichen verwendet werden. Der zweite Volumenstromsensor 50 ist in ein Wegeventil integriert, wozu anstelle des ersten Gehäuseteils 12 nach Figur 1 das Wegeventil-Gehäuse 51 verwendet wird. In diesem Ventilgehäuse 51 ist nun die erste Stufenbohrung 16 eingearbeitet und darin die entsprechenden Teile des elektromechanischen Wandlers 33 eingebaut. Dabei wird ein stiftförmiger Innenkörper 52 verwendet, der lediglich mit seinem einen Ende 53 im Ventilgehäuse 51 zentral zum Kanal 22 befestigt ist. Im zweiten Gehäuseteil 54 ist nun der zweite Druckmittel-Anschluß 51 koaxial zum Kanal 22 angeordnet.

Die Wirkungsweise des zweiten Volumenstromsensors 50 entspricht derjenigen des ersten Volumenstromsensors 10 nach Figur 1. Durch seine kompakte und integrierte Bauweise eignet sich der zweite Volumenstromsensor 50 besonders zur Anwendung in mobilen Einsatzfällen, wo er für Volumenstromregelungen oder Steuerungen herangezogen werden kann.

Selbstverständlich sind an den gezeigten Ausführungsformen Änderungen möglich, ohne vom Gedanken der Erfindung abzuweichen. So kann der Volumenstromsensor anstelle der gezeigten Ausführung für zwei Strömungsrichtungen auch so ausgeführt werden, daß die Messung nur in einer Strömungsrichtung erfolgt, wie dies prinzipiell auch im eingangs genannten Stand der Technik gezeigt ist. Am Schwebekörper 39 könnte dadurch eine der abstützenden Federn entfallen und dafür ein gehäusefester Anschlag vorgesehen werden. Auch die Bauart der profilierten Wülste 38, 44 kann nach Bedarf geändert werden, um bestimmte Kennlinienverläufe zu erzielen. Anstelle der beiden Wülste am Außenkörper 35 und am Innenkörper 36 kann ein einziger profilierter Wulst auch nur an einem dieser Körper angeordnet werden, so daß der andere Körper einfacher baut. Obwohl das aufgezeigte induktive Meßprinzip in vorliegendem Zusammenhang besonders vorteilhaft ist, könnte der Weg des Schwebekörpers 44 auch über andere magnetfeldabhängige Mittel gemessen werden. Für eine solche Wegmessung würden sich auch Magnetfeldsensoren oder Hall-Sensoren eignen. Auch könnte eine kapazitive Meßmethode angewandt werden, bei welcher der Schwebekörper als eine Elektrode ausgeführt wird, während außen an einem Druckrohr aus Kunststoff die zweite Elektrode angeordnet wird. Weiterhin wäre es möglich, anstelle der elektrischen Spulen 28, 29 die Federn 41, 42 selbst als elektrische Spulen zu verwenden und in einen Stromkreis zu schalten, wobei aus deren Änderung der Induktivität abhängig vom Hub des Schwebekörpers ein elektrisches Ausgangssignal gewonnen wird.

Auch das Gehäuse kann anstelle zweier gleicher Gehäuseteile in anderer Weise aufgebaut werden, so läßt sich das Gehäuse auch als gerades Rohrstück ausbilden, bei dem die beiden Anschlüsse koaxial liegen. Eine solche Ausbildung zeigt Figur 4, die einen Längsschnitt durch einen dritten Volumenstromsensor 60 zeigt, der sich von demjenigen nach Figur 1 wie folgt unterscheidet, wobei für gleiche Bauelemente gleiche Bezugszeichen verwendet werden.

Der dritte Volumenstromsensor 60 hat ein Gehäuse 61, bei dem das erste, im wesentlichen rohrförmigen Gehäuseteil 62 zugleich die Funktion des Druckrohrs übernimmt; es besteht zu diesem Zweck aus nicht magnetisierbarem Material und trägt außen unmittelbar den Spulenträger 27, insbesondere an einem kreisringförmigen Abschnitt 66. Das Steckergehäuse 32 ist nun direkt am Spulenträger 27 aufgesattelt. Als zweites Gehäuseteil dient eine Gewindehülse 63, die in das erste Gehäuseteil 62 eingeschraubt ist, den axial angeordneten zweiten Anschluß 21 bildet und den stiftförmigen Innenkörper 64 gehäusefest lagert, indem letzterer mit seinem freien Ende in die Gewindehülse 63 eingesteckt und insbesondere durch Löten befestigt ist. Zur Bildung des Kanals 22 weist der Innenkörper 64 an seinem eingesteckten Ende mehrere axial verlaufende, längs dessen Umfang verteilte Aussparungen 65 auf. Die Wirkungsweise des dritten Volumenstromsensors 60 entspricht derjenigen nach Figur 1. Mit dem besonders kompakt, einfach und kostengünstig bauenden dritten Volumenstromsensor 60 lassen sich im Vergleich zu Figur 1 auch andere Einbaubedingungen erfüllen.

Der Anschluß 18 beim dritten Volumenstromsensor 60 ist Teil einer genormten Rohrverschraubung, z.B. nach DIN 2353, an die direkt ein Rohr oder Schlauch mit einem Schneidring und Überwurfmutter angeschlossen werden kann. Mit der Gewindehülse 63 wird der Volumenstromsensor 60 in die Anschlußbohrung eines Ventiles oder Zylinders eingeschraubt.

Die Gewindehülse 63 kann auch durch eine Einschraub-Verschraubung ersetzt werden. Dann kann der Volumenstromsensor im Verlauf einer Rohrleitung angeordnet werden.

## Patentansprüche

1. Elektrofluidischer Volumenstromsensor zur Erzeugung eines von der Größe eines Volumenstroms abhängigen elektrischen Signals, wobei der Volumenstrom in einem Gehäuse durch einen zwischen zwei Druckmittel-Anschlüssen verlaufenden Kanal geführt ist, in den ein variabler Steuerquerschnitt geschaltet ist, der von einem Innenkörper und einem diesen umgebenden Außenkörper gebildet wird, von welchen Körpern wenigstens einer relativ zum anderen im Gehäuse beweglich angeordnet ist und wenigstens einer profiliert ausgebildet ist, wobei der bewegliche Körper von dem Volumenstrom entgegen der Kraft mindestens einer gehäusefest abgestützten Feder auslenkbar ist und diese Auslenkung von einem elektromechanischen Wandler erfaßt wird, der ein vom Volumenstrom abhängiges elektrisches Signal erzeugt, dadurch gekennzeichnet, daß der den variablen Steuerquerschnitt (34) mitformende Außenkörper (35) als ein von der Feder (41, 42) belasteter, beweglicher Schwebekörper (39) ausgeführt ist und daß der den Schwebekörper (39) durchdringende Innenkörper (36) gehäusefest angeordnet ist.

2. Volumenstromsensor nach Anspruch 1, dadurch gekennzeichnet, daß der Schwebekörper (39) in einem hohlzylindrischen Druckrohr (26, 66) angeordnet ist und insbesondere durch Spiel berührungsfrei in ihm gelagert ist.

3. Volumenstromsensor nach Anspruch 1 oder 2, dadurch gekennzeichnet, daß der hülsenförmige Schwebekörper (39) außen eine in Bewegungsrichtung gesehen ebene Mantelfläche (43) aufweist, die insbesondere kreiszylindrisch ausgebildet ist.

4. Volumenstromsensor nach einem der Ansprüche 1 bis 3, dadurch gekennzeichnet, daß Mittel (33) vorgesehen sind, welche den Hub des Schwebekörpers (39) erfassen und ein davon abhängiges elektrisches Ausgangssignal bilden.

5. Volumenstromsensor nach einem oder mehreren der Ansprüche 1 bis 4, dadurch gekennzeichnet, daß der Schwebekörper (39) selbst ein unmittelbares Bauteil des elektromechanischen Wandlers (33) ist.

6. Volumenstromsensor nach Anspruch 4 oder 5, dadurch gekennzeichnet, daß der Wandler ein induktiv arbeitender Wandler (33) ist.

7. Volumenstromsensor nach einem der Ansprüche 2 bis 6, dadurch gekennzeichnet, daß am Außenumfang des Druckrohrs (26, 66) mindestens eine, insbesondere zwei elektrische Spulen (28, 29) des Wandlers (33) angeordnet sind.

8. Volumenstromsensor nach einem der Ansprüche 2 bis 7, dadurch gekennzeichnet, daß das Druckrohr (26, 66) aus nicht magnetisierbarem Material besteht.

9. Volumenstromsensor nach einem oder mehreren der Ansprüche 1 bis 8, dadurch gekennzeichnet, daß der Schwebekörper (39) aus magnetisch leitfähigem, insbesondere ferromagnetischem Material besteht.

10. Volumenstromsensor nach einem der Ansprüche 1 bis 9, dadurch gekennzeichnet, daß der Schwebekörper (39) zwischen zwei sich gehäusefest abstützenden Federn (41, 42) eingespannt ist, die ihn berührungsfrei und beweglich im Gehäuse (11) lagern.

11. Volumenstromsensor nach einem der Ansprüche 1 bis 10, dadurch gekennzeichnet, daß jede Feder (41, 42) spiralförmig ausgebildet ist und koaxial zum Schwebekörper (39) im Kanal (22) angeordnet und ausschließlich axial durchströmt ist, wobei diese Strömung insbesondere im Inneren der Feder (41, 42) verläuft.

12. Volumenstromsensor nach einem der Ansprüche 1 bis 11, dadurch gekennzeichnet, daß der Schwebekörper (39) an seiner Innenwand einen in Durchflußrichtung gesehen profilierten Wulst (44) aufweist.

13. Volumenstromsensor nach einem der Ansprüche 1 bis 12, dadurch gekennzeichnet, daß der Innenkörper (36) einen in Durchflußrichtung gesehen profilierten Wulst (38) aufweist, der dem variablen Steuerquerschnitt (34) zugeordnet ist.

14. Volumenstromsensor nach einem der Ansprüche 1 bis 13, dadurch gekennzeichnet, daß der Innenkörper (36, 52, 64) stiftförmig ausgebildet ist und mit mindestens einem Ende fest im Gehäuse (11, 51, 61) angeordnet ist, so daß er koaxial in den Kanal (22) ragt.

15. Volumenstromsensor nach einem der Ansprüche 1 bis 14, dadurch gekennzeichnet, daß das Gehäuse (11) eine Trennebene (15) aufweist, in der die den Kanal (22) bildenden Stufenbohrungen (16, 17) in beiden Gehäuseteilen (12, 13) aneinanderstoßen und daß jede Stufenbohrung (16, 17) mindestens einen axialen Absatz (24) für die Federn (41, 42) und einen axialen Absatz (23) für das Druckrohr (26) aufweisen.

16. Volumenstromsensor nach Anspruch 15, dadurch gekennzeichnet, daß jedes der Gehäuseteile (12, 13) einen Druckmittel-Anschluß (18, 21) aufweist, der radial zum Kanal (22) verläuft, und daß der elektrische Anschluß (31) im Bereich der Trennebene (15) liegt.

17. Volumenstromsensor nach einem der Ansprüche 1 bis 15, dadurch gekennzeichnet, daß er in den Verbraucheranschluß eines Wegeventilgehäuses (51) eingebaut ist und der stiftförmige Innenkörper (52) nur mit einem Ende (53) im Wegeventilgehäuse (51) befestigt ist, wobei der Anschluß (21) im angebauten, zweiten Gehäuseteil (54) gleichachsig zum Kanal (22) angeordnet ist.

18. Volumenstromsensor nach einem der Ansprüche 4 bis 6 und 7 bis 17, dadurch gekennzeichnet, daß als elektrisches Mittel zur Erfassung des Weges am Schwebekörper (36) ein Magnetfeldsensor oder Hall-Sensor verwendet wird.

19. Volumenstromsensor nach einem der Ansprüche 4 bis 6 und 10 bis 17, dadurch gekennzeichnet, daß als elektrisches Mittel zur Erfassung des Weges am Schwebekörper (36) die ihn belastende Feder als eine in einen Stromkreis geschaltete, elektrische Spule verwendet wird, aus deren Änderung der Induktivität abhängig vom Weg ein elektrisches Ausgangssignal gewonnen wird.

20. Volumenstromsensor nach einem der Ansprüche 4 oder 5 und 10 bis 17, dadurch gekennzeichnet, daß als elektrisches Mittel zur Erfassung des Weges am Schwebekörper (36) eine kapazitive Meßmethode angewandt wird, bei welcher der Schwebekörper als eine der beiden Elektroden ausgebildet ist.

21. Volumenstromsensor nach einem der Ansprüche 1 bis 14 und 18 bis 20, dadurch gekennzeichnet, daß das Gehäuse (60) ein Gehäuseteil (62) aufweist, das aus nicht magnetisierbarem Material besteht und die Funktion des Druckrohrs übernimmt.

22. Volumenstromsensor nach Anspruch 21, dadurch gekennzeichnet, daß das Gehäuseteil (62) im wesentlichen rohrförmig ausgebildet ist und einen kreisringförmigen Abschnitt (66) aufweist, auf dem der Spulenträger (27) geführt und befestigt ist.

23. Volumenstromsensor nach Anspruch 21 oder 22, dadurch gekennzeichnet, daß das Gehäuseteil (62) eine Gewindehülse (63) aufnimmt, in welcher der stiftförmige Innenkörper (65) gelagert ist, mit seinem einen Ende, an dem den Kanal (22) bildende, längs verlaufende Aussparungen (65) angeordnet sind.
